# EUROPÄISCHE PATENTANMELDUNG

(11) **EP 1 136 176 A2**
(43) Veröffentlichungstag der Anmeldung: **26.09.2001**
(21) Anmeldenummer: 01106527.3
(22) Anmeldetag: 15.03.2001
(51) Int. Cl.: B23Q 17/00, B23Q 17/20

(54) **Verfahren zur Bestimmung eines Parameters mindestens eines Fügeteils**

(30) Priorität: 23.03.2000 AT 4982000
(71) Anmelder: VA TECH Transport- und Montagesysteme GmbH & Co, 4031 Linz (AT)
(72) Erfinder: Podlesnic, Andreas, 4312 Ried (AT)
(74) Vertreter: VA TECH Patente GmbH

(57) **Zusammenfassung**

Gezeigt werden ein Verfahren sowie entsprechende Vorrichtungen zur Bestimmung eines Parameters mindestens eines Fügeteils, wie eines Karosserieteils (2), wobei sich der Fügeteil (2) in einer Befestigung, z.B. in einem Spannrahmen (1), befindet und von der Befestigung (1) auf den Fügeteil (2) eine definierte Kraft ausgeübt wird. Dabei ist vorgesehen, dass an zumindest einer Stelle (B) der Befestigung (1) oder des Fügeteils (2) die auf den Fügeteil (2) wirkende Kraft gemessen wird, die Messdaten mit Referenzdaten verglichen werden und aufgrund des Vergleichs die Geometrie und/oder die Lage des Fügeteils (2) und/oder die weitere Verarbeitung des Fügeteils (2) bestimmt wird.

## Beschreibung

Die Erfindung betrifft ein Verfahren zur Bestimmung eines Parameters mindestens eines Fügeteils, wie eines Karosserieteils, wobei sich der Fügeteil in einer Befestigung, z.B. in einem Spannrahmen, befindet und von der Befestigung auf den Fügeteil eine definierte Kraft ausgeübt wird, und/oder zur Bestimmung der Lage eines Fügeteils bezüglich der Befestigung, sowie eine Bearbeitungsstation und einen Spannrahmen zur Durchführung des Verfahrens.

Die Erfindung findet beispielsweise Anwendung bei einer Vorrichtung zum Zuführen, Positionieren und Schweißen von Teilen einer Fahrzeugkarosserie in einer Bearbeitungsstation einer Fertigungsstraße einer Automobilfertigung. Zum Zuführen und Positionieren der Karosserieteile sind Befestigungen (Spannrahmen) vorgesehen, an denen die Fügeteile (Karosserieteile) in einer genau definierten Position befestigt sind. Die Spannrahmen selbst werden als Fügeteile mittels geeigneter Einrichtungen der Bearbeitungsstation (z.B. feststehenden Säulen in der Funktion als Befestigung) in die gewünschte Position gebracht und gehalten.

Die Bearbeitungsstation hat die Aufgabe, die Endgeometrie der Karosserie festzulegen, wodurch dem positionsgenauen Spannen und Fügen der Karosserieteile große Bedeutung zukommt. Eine entsprechende Bearbeitungsstation ist in der EP 909 603 A1 gezeigt, deren Inhalt hiermit als zur Offenbarung der vorliegenden Erfindung gehörend erklärt wird.

Die Überprüfung der geforderten Qualitätsmerkmale in Bezug auf Maßhaltigkeit erfolgt gemäß dem Stand der Technik in separaten Messstationen, z.B. mittels Lasermesszellen, in der Fertigungsstraße. Dabei werden sowohl fertiggestellte Karosserien als auch Karosserien in bestimmten Aufbaustufen, also im bereits teilweise verschweißten Zustand, vermessen.

Jedoch wird dadurch das Problem, dass fehlerhafte Karosserieteile und/oder der Verschleiß oder die Verschmutzung von den am Spannrahmen angebrachten Spannvorrichtungen zu einer unzulässigen Belastung der Spannvorrichtungen und damit zu einem Ausfall der Bearbeitungsstation führen, nicht gelöst. Auch kann die Fehlerhaftigkeit eines Karosserieteils erst nach dem Zusammenbauen erkannt werden, sodass eventuell das gesamte Produkt verworfen werden muss.

Eine Aufgabe der vorliegenden Erfindung besteht nun darin, ein Verfahren und eine Vorrichtung zu entwickeln, mit der bereits während des Fügevorganges Aussagen über fehlerhafte Fügeteile, insbesondere Karosserieteile, oder fehlerhafter Befestigungen, wie Spannvorrichtungen, sowie die zu erwartenden Maßabweichungen der Produkte, insbesondere von Karosserien, getroffen werden können.

Das erfindungsgemäße Verfahren ist dadurch gekennzeichnet, dass an zumindest einer Stelle der Befestigung oder des Fügeteils die auf den Fügeteil wirkende Kraft gemessen wird, die Messdaten mit Referenzdaten verglichen werden und aufgrund des Vergleichs die Geometrie und/oder die Lage des Fügeteils und/oder die weitere Verarbeitung des Fügeteils bestimmt wird.

Somit kann bereits während des Fügevorganges festgestellt werden, ob ein bestimmter Fügeteil oder das zusammengefügte Produkt die notwendigen Anforderungen bezüglich Geometrie erfüllt. Es können fehlerhafte Teile oder Verspannungen durch nicht korrektes Einlegen der Fügeteile in die Befestigung oder eine Abnützung der Befestigung, insbesondere der Spannvorrichtungen, detektiert werden. Ein fehlerhafter Fügeteil kann sofort aus dem Herstellungsverfahren ausgeschlossen oder entsprechend als nicht in Ordnung gekennzeichnet werden. Das Verfahren ist anwendbar auf ein System, wo der Fügeteil ein Bauteil, insbesondere Karosserieteil, und die Befestigung ein Spannrahmen ist, aber auch auf Systeme, wo der (mit einem Bauteil bestückte) Spannrahmen als Fügeteil an der Bearbeitungsstation, z.B. an deren Säulen, als Befestigung ausgerichtet wird. Die Kraft auf den Spannrahmen kann in der Bearbeitungsstation auch am Spannrahmen und nicht in dessen Befestigung gemessen werden.

Es wird hiermit festgehalten, dass der Begriff Kraftmessung selbstverständlich auch eine Druckmessung mit einschließt.

Weiters kann vorgesehen sein, dass an zumindest einer weiteren Stelle die Position des Fügeteils zu einem Bezugspunkt außerhalb des Fügeteils gemessen wird und diese Messdaten mit entsprechenden Referenzdaten verglichen und zur Bestimmung der Geometrie und/oder der Lage und/oder der weiteren Verarbeitung des Fügeteils verwendet werden.

Dadurch kann beispielsweise aufgrund einer Abstandsmessung zwischen Fügeteil und Befestigung eine Durchbiegung von Fügeteilen ermittelt werden.

Zusätzlich kann vorgesehen sein, dass eine Verformung, wie Dehnung oder Durchbiegung, der Befestigung gemessen wird und diese Messdaten zur Bestimmung der Geometrie der Befestigung und/oder eines an der Befestigung anliegenden Fügeteils und/oder einer weiteren Befestigung verwendet werden.

Dadurch kann die Verformung der Befestigung selbst, z.B. aufgrund von ungleichmäßiger Wärmeeinwirkung, detektiert werden. Es kann aber auch eine Durchbiegung der Befestigung beim Ausrichten bzw. Anpressen an nicht normgerechte andere Fügeteile oder Befestigungen bestimmt werden. Insbesondere können störende Veränderungen der Geometrie eines Spannrahmens gefunden und in der Folge auch konstruktive Maßnahmen gesetzt werden, wie eine Verstärkung des Spannrahmens.

Eine mögliche Ausführung der Erfindung besteht darin, dass der Zusammenhang zwischen Messdaten und Referenzdaten aus Versuchsmessungen bestimmt wird.

Dabei kann aus Messungen der Kräfte an Fügeteilen mit jeweils unterschiedlicher, bekannter Geometrie und/oder unter Veränderung der Bedingungen (Abnützung) der Spannvorrichtungen die Korrelation zwischen auftretenden Kräften und vorliegender Geometrie ermittelt und in geeigneter Form, wie in einer Datenbank, abgelegt werden.

Eine andere Ausführung der Erfindung besteht darin, dass der Zusammenhang zwischen Messdaten und Referenzdaten aus Simulationsrechnungen bestimmt wird.

Dabei wird ein mathematisches Modell des Systems Befestigung-Fügeteil erstellt und es werden unter Variation der Bedingungen, wie Geometrie der Fügeteile, Zustand der Spannvorrichtungen, die auftretenden Kräfte ermittelt, wobei der Zusammenhang zwischen auftretenden Kräften und Bedingungen in geeigneter Form festgehalten wird.

Weiters ist es von Vorteil, wenn die Messdaten dynamisch erfasst werden.

Dadurch kann der Kraft- oder Wegverlauf über einen längeren Zeitraum betrachtet und ebenfalls zur Beurteilung des vorliegenden Zustands verwendet werden. Anhand des Kraft-Zeit-Verlaufs lassen sich etwa die Spanner der Spannvorrichtung auf Schwergängigkeit, Abnützung und Überlastung überwachen. So lässt z.B. ein Absinken der Kraft auf einen Fügeteil mit zunehmender Einspanndauer auf eine fehlerhafte Spannvorrichtung schließen. Insbesondere kann auch der zeitliche Kraft- oder Wegverlauf über mehrerer aufeinanderfolgende Fügeteile betrachtet werden.

Ein weiteres Merkmal der Erfindung besteht darin, dass bei Abweichung der Messdaten von den Referenzdaten eine Ausgleichshandlung erfolgt.

In bestimmten Fällen, wie bei symmetrischen Abweichungen der Messwerte von zwei Kraftmesseinrichtungen, die auf eine Schrägstellung des Fügeteils schließen lassen, kann durch entsprechende Einrichtungen eine Verkippung in die gewünschte Lage veranlasst werden.

Der Spannrahmen zur Durchführung des erfindungsgemäßen Verfahrens mit am Spannrahmen angebrachten Spannvorrichtungen zum Halten bzw. Spannen von Fügeteilen, ist dadurch gekennzeichnet, dass zumindest eine Spannvorrichtung eine Kraftmesseinrichtung aufweist, die mit einer Auswerteeinheit verbunden ist, mit welcher die Messdaten mit Referenzdaten vergleichbar und aufgrund des Vergleichs die Geometrie und/oder die Lage des Fügeteils und/oder die weitere Verarbeitung des Fügeteils bestimmbar ist.

Damit können die auf einen Fügeteil wirkenden Kräfte und deren Abweichungen von der Norm ermittelt werden. Dabei kommen beispielsweise Druckmessdosen, Druckübersetzer oder Dehnungsmessstreifen zur Anwendung. Dadurch, dass in der erfindungsgemäßen Bearbeitungsstation die Kraft- und gegebenenfalls die Wegmesseinrichtungen mit einer zentralen Auswerteeinheit verbunden sind, ist gewährleistet, dass aufgrund des in der Auswerteeinheit festgehaltenen Zusammenhangs zwischen Messdaten und Referenzdaten die Geometrie und/oder die Lage des Fügeteils und/oder die weitere Verarbeitung des Fügeteils rasch bestimmt werden kann.

Dabei kann vorgesehen sein, dass die Kraftmesseinrichtung in einer Auflagefläche für den Fügeteil angeordnet ist.

Dies stellt eine besonders einfache und direkte Art der Kraftmessung sicher.

Alternativ oder zusätzlich kann vorgesehen sein, dass eine Kraftmesseinrichtung an einem Spanner der Spannvorrichtung angeordnet ist.

Der bewegliche Spanner liefert somit beispielsweise ein ein äquivalentes Kraftsignal zur Kraftmesseinrichtung auf der gegenüberliegenden Seite, wodurch etwa die Ausfallssicherheit des Kraftmesssystems erhöht wird.

Das Merkmal, dass eine Kraftmesseinrichtung zwischen Spannvorrichtung und Spannrahmen angeordnet ist, hat den Vorteil, dass diese Einrichtung auch bei Wechsel der Spannvorrichtungen erhalten bleiben kann.

Weiters kann vorgesehen sein, dass am Spannrahmen zumindest eine Wegmesseinrichtung angebracht ist, die geeignet ist, den Abstand zwischen Fügeteil und Spannrahmen zu messen, und die mit der Auswerteeinheit verbunden ist.

Auf diese Weise können Durchbiegungen des Fügeteils ermittelt werden.

Es ist weiters von Vorteil, wenn am Spannrahmen zumindest eine Messeinrichtung, die mit der Auswerteeinheit verbunden ist, zur Messung der Verformung des Spannrahmens angeordnet ist.

Eine erfindungsgemäße Bearbeitungsstation zum Positionieren von zumindest einem Spannrahmen mit Hilfe von in der Bearbeitungsstation vorgesehenen Befestigungen, insbesondere zur Durchführung des erfindungsgemäßen Verfahrens, kann dadurch gekennzeichnet sein, dass zumindest eine Befestigung und/oder der Spannrahmen (hier in der Funktion als Fügeteil) eine Kraftmesseinrichtung zur Messung der auf den Spannrahmen wirkenden Kraft aufweist, die mit einer Auswerteeinheit verbunden ist, mit welcher die Messdaten mit Referenzdaten vergleichbar und aufgrund des Vergleichs die Geometrie und/oder die Lage des Spannrahmens bestimmbar ist.

Dadurch können die auf einen Spannrahmen wirkenden Kräfte, z.B. durch eine nicht exakt ausgerichtete oder eine zu große, insbesondere zu breite in der Bearbeitungsstation befindliche Karosserie, bestimmt und einer zentralen Auswerteeinheit zugeführt werden.

Besonders vorteilhaft ist, wenn zusätzlich die erfindungsgemäßen Spannrahmen angewendet werden.

In diesem Fall kann vorgesehen sein, dass sämtliche Kraft- und gegebenenfalls Wegmesseinrichtungen des Spannrahmens und der Befestigung mit einer zentralen Auswerteeinheit verbunden sind.

Das erfindungsgemäße Verfahren und die erfindungsgemäßen Vorrichtungen sind in den Fig. 1 bis 5 beispielhaft dargestellt.

Fig. 1 zeigt schematisch die Seitenansicht eines in einem Spannrahmen eingespannten Bauteils.

Fig. 2 zeigt schematisch als Detail der Fig. 1 die Seitenansicht der unteren Spannvorrichtung mit Kraftmesseinrichtung.

Fig. 3 zeigt schematisch als Detail der Fig. 1 die Seitenansicht der Wegmesseinrichtung für einen normgerechten Bauteil.

Fig. 4 zeigt schematisch als Detail der Fig. 1 die Seitenansicht der Wegmesseinrichtung für einen normgerechten Bauteil.

Fig. 5 zeigt eine Bearbeitungsstation der Automobilfertigung.

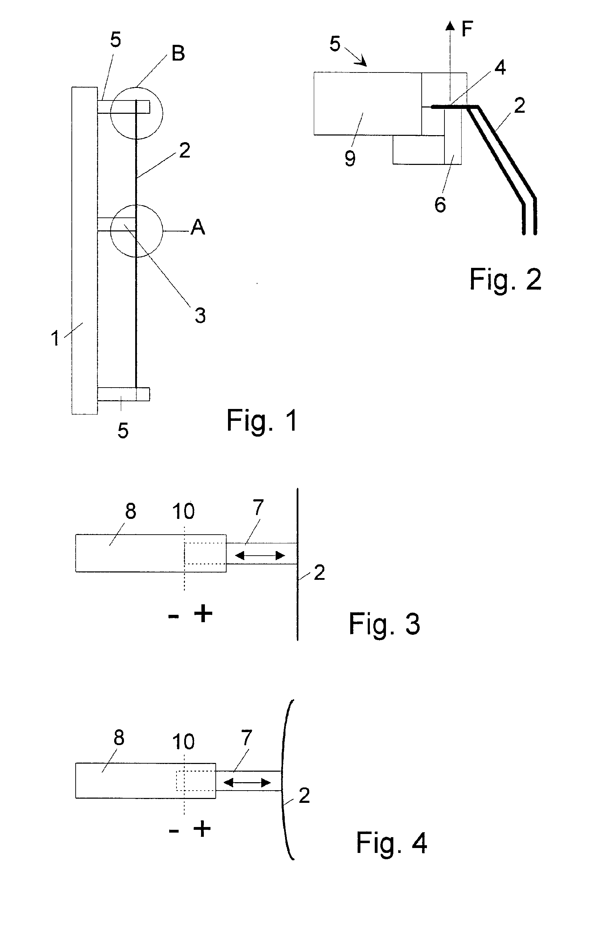

In Fig. 1 ist am Spannrahmen 1 mittels Spannvorrichtungen 5 ein Füge- bzw. Bauteil 2 in einer fixen Position befestigt. Eine Wegmesseinrichtung 3 bestimmt den Abstand zwischen der Oberfläche des Bauteils 2 und dem Spannrahmen 1 normal zu Ebene des Spannrahmens 1. Das Detail B, das die Spannvorrichtung 5 zeigt, ist in Fig. 2 wiedergegeben. Das Detail A, das die Wegmesseinrichtung 3 zeigt, ist in den Fig. 3 und 4 wiedergegeben.

Die Spannvorrichtung 5 in Fig. 2 besteht aus einer Klemmvorrichtung 9, der bezüglich des Spannrahmens 1 eine definierte Position besitzt. Dies kann entweder durch eine feste Anbringung direkt am Spannrahmen 1 oder durch eine Einrichtung zum Verstellen und Verriegeln der Position der Spannvorrichtung 5, wie eine einstellbare Konsole, erfolgen. Die Klemmvorrichtung 9 enthält den Antrieb für die Betätigung des bezüglich der Klemmvorrichtung 9 beweglichen Spanners 6, der den Bauteil 2 gegen die Auflagefläche der Klemmvorrichtung 9 drückt und somit den Bauteil in Position hält. Eine Kraftmesseinrichtung 4, z.B. eine Kraftmessdose oder ein Dehnungsmessstreifen, ist an oder in der Auflagefläche integriert und misst die auf den Bauteil 2 wirkende Kraft F. Alternativ oder zusätzlich kann im Konturstück des Spanners 6 eine Kraftmesseinrichtung angeordnet sein.

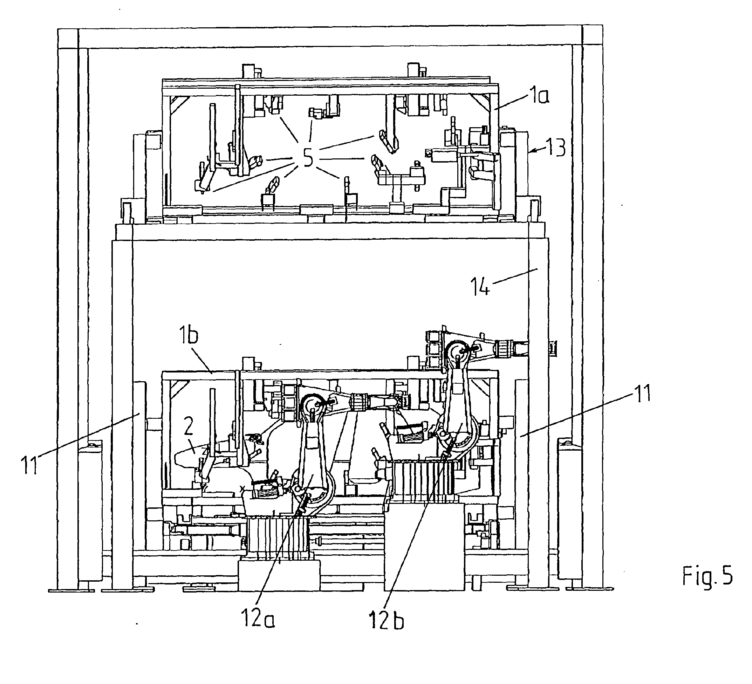

Die Kraftmesseinrichtungen können aber auch, eventuell zusätzlich, zwischen Spannrahmen 1 und Klemmvorrichtung 9 der Spannvorrichtung 5 vorgesehen werden. Wenn die Klemmvorrichtung 9 nicht unmittelbar am Spannrahmen befestigt ist, sondern an einer Einrichtung des Spannrahmens (siehe Fig. 5), so kann die Kraftmesseinrichtung auch zwischen Klemmvorrichtung 9 und der entsprechenden Einrichtung bzw. zwischen der entsprechenden Einrichtung und dem Spannrahmen 1 angeordnet werden.

Fig. 3 zeigt die Wegmesseinrichtung 3, die aus einem in einer definierten Position zum Spannrahmen befindlichen Grundkörper 8 und einem darin verschiebbaren Konturstück 7 besteht. Der Bauteil 2 liegt am Konturstück 7 an und drückt dieses in den Grundkörper 8. Für einen normgerechten Bauteil 2 wird die entsprechende Relativstellung zwischen Grundkörper 8 und Konturstück 7 als Sollwert (strichlierte Linie 10) festgelegt.

Weicht ein Bauteil 2, wie in Fig. 4 dargestellt, von der Sollgeometrie ab, indem er beispielsweise zu hoch ist und sich aufgrund des gleichbleibenden Abstands zwischen den Spannvorrichtungen 5 in Fig. 1 durchbiegt, so wird das Konturstück 7 vom festgelegten Sollwert 10 abweichen. Diese Abweichung kann detektiert und der Bauteil 2 beispielsweise aus dem Produktionsprozess ausgegliedert werden.

Fig. 5 zeigt eine Bearbeitungsstation, in der sich ein mit einem Bauteil 2 bestückter Spannrahmen 1b in der Arbeitsposition befindet und der Bauteil 2 von Schweißrobotern 12a und 12b bearbeitet wird. Der Spannrahmen 1b ist an den Säulen 11 ausgerichtet und verriegelt. Im Magazin 13, das auf einem Rahmen 14 ruht, befinden sich weitere leere Spannrahmen 1a, die in Arbeitsposition abgesenkt und mit Bauteilen 2 bestückt werden können, wobei die Bauteile 2 durch Spannvorrichtungen 5 in der gewünschten Lage gehalten werden.

Das erfindungsgemäße Verfahren und die erfindungsgemäßen Vorrichtungen können vorteilhaft auf die folgenden Produktionsabläufe der Automobilfertigung in einer Bearbeitungsstation angewendet werden:

Ein Seitenteil einer Automobilkarosserie wird in einem Spannrahmen mittels mehrerer Spanneinrichtungen befestigt: Es erfolgen jeweils Kraftmessungen an den Spanneinrichtungen. Zumindest eine zusätzliche Wegmessung, etwa im mittleren Bereich des Seitenteils, liefert eine Information bezüglich Durchbiegung des Seitenteils.

Ein aus Innen- und Außenteil bestehender Seitenteil einer Karosserie soll zusammengespannt werden: Der Seitenaußenteil wird in einem Spannrahmen mittels mehrerer Spanneinrichtungen befestigt wie oben beschrieben. Der Seiteninnenteil ist bereits mit der Karosserie oder Teile davon, z.B. dem Fahrzeuboden, vorläufig verbunden. Der Innenteil kann hierfür z.B. ein Langloch aufweisen, durch das eine Lasche des Fahrzeugbodens gesteckt und dann zur Befestigung umgebogen wird. Der Fahrzeugboden ist in der Bearbeitungsstation geeignet in einer fixen Position gehalten. Der Spannrahmen mit dem bereits eingespannten Seitenaußenteil wird zur Bearbeitungsstation gefahren und an der Bearbeitungsstation ausgerichtet. Die Spannvorrichtungen des Spannrahmens greifen an den entsprechenden Stellen der Karosserie an. Es erfolgen jeweils Kraftmessungen an den Spanneinrichtungen, zusätzlich können Wegmessungen zur Bestimmung des Abstands zwischen Spannrahmen und dem gespannten Seitenaußenteil erfolgen. Weiters ist eine Messung der Verformung des Spannrahmens, z.B. mittels Dehnungsmessstreifen, vorteilhaft.

Ein einteiliger Seitenteil einer Automobilkarosserie, der in einem Spannrahmen mittels mehrerer Spanneinrichtungen befestigt ist, wird mit mindestens einem weiteren Karosserieteil, wie dem Fahrzeugboden und/oder dem Fahrzeugdach, bzw. mit dessen jeweiliger Befestigung zusammengespannt: Der Fahrzeugboden bzw. das Fahrzeugdach ist in der Bearbeitungsstation geeignet in einer fixen Position gehalten, der Spannrahmen mit dem bereits eingespannten Seitenteil wird zur Bearbeitungsstation gefahren und an der Bearbeitungsstation ausgerichtet. Die Spannvorrichtungen des Spannrahmens greifen an den entsprechenden Stellen der weiteren Karosserieteile an. Es erfolgen jeweils Kraftmessungen an den Spanneinrichtungen zur Bestimmung der Kraft zwischen Spannrahmen und einem weiterem Karosserieteil, zusätzlich können Wegmessungen zur Bestimmung des Abstands zwischen Spannrahmen und Seitenteil erfolgen. Weiters ist eine Messung der Verformung des Spannrahmens, z.B. mittels Dehnungsmessstreifen, vorteilhaft.

Im Fall, dass die in der Bearbeitungsstation befindliche, im Wesentlichen rechteckige Karosserie oder der Fahrzeugboden oder das Fahrzeugdach nicht exakt ausgerichtet ist und schräg steht, werden die beiden Spannrahmen, die die Seitenteile zur Bearbeitungsstation heranbringen und in der Bearbeitungsstation verriegelt werden, unterschiedliche Schließkräfte erfahren. Diese Messwerte können ebenfalls der zentralen Auswerteeinheit zugeführt werden.

Die Bearbeitungsstation umfasst beispielsweise zumindest vier ortsfeste senkrechte Säulen, an denen die Spannrahmen für Seitenteile sowie der Fahrzeugboden und das Fahrzeugdach bzw. deren entsprechende Befestigungen, ausgerichtet werden. Die Fixierung erfolgt über Einrichtungen der Spannrahmen bzw. andere Befestigungen, wie z.B. Dorne, die in entsprechende Vertiefungen im Boden bzw. den Säulen eingreifen.

Um den gemessenen Werten von Kraft, Weg und Dehnung eine entsprechende Geometrie des Bauteils bzw. eine bestimmte Qualität (in Ordnung/nicht in Ordnung) zuweisen zu können, muss die Korrelation zwischen den Messwerten und den Abmessungen des Bauteils bzw. der Bauteile festgestellt werden. Dies kann mit Hilfe eines mathematisches Modells, beispielsweise mittels der Methode der finiten Elemente, die dem Fachmann geläufig ist, erfolgen. Das Modell bildet sowohl den Spannrahmen mit den Spannvorrichtungen als auch den Bauteil nach. Mit dem Modell können die auf den Bauteil wirkenden Kräfte und Verformungen und die Verformungen des Spannrahmens in Abhängigkeit von den gegebenen Größen (Abmessungen des Bauteils und des Spannrahmens, Temperatur, Verschmutzung oder Abnützung des Spanners von Spannvorrichtungen, Lage des Bauteils bezüglich des Spannrahmens, ...) berechnet werden. Die Ergebnisse können in geeigneter Form, z.B. in Datenbanken, in der zentralen Auswerteeinheit festgehalten werden.

Die Berechnungen mit Hilfe der Methode der finiten Elemente geben Auschluss über die Größenordnung der auftretenden Kräfte und Verformungen am Bauteil und an der Vorrichtung. Auf dieser Grundlage können einerseits die Stellen für die Anordnung der Messeinrichtungen bestimmt werden und andererseits können für diese Stellen die zu erwartenden Messwerte, etwa die voraussichtlichen Kräfte, kalibriert werden.

Soll auch die Kraft auf den in der Befestigung der Bearbeitungsstation befindlichen Spannrahmen berücksichtigt werden, so ist ein entsprechendes mathematisches Modell des in der Bearbeitungsstation befindlichen Spannrahmens und der entsprechenden Teile der Bearbeitungsstation sowie anderer in der Bearbeitungsstation befindlicher Bauteile oder Spannrahmen zu erstellen.

Werden nun die in der Bearbeitungsstation gemessenen Werte in der zentralen Auswerteeinheit mit den Referenzwerten verglichen, zum Beispiel mit Hilfe einer Auswertelogik, so kann eine Aussage getroffen werden, welche geometrische Situation und/oder welcher Verschmutzungs- oder Abnützungsgrad vorliegt. Es können auch aufgrund der Referenzwerte Grenzwerte (für die Kraft, für den Abstand, ...) festgelegt werden. Überschreiten die Messwerte diese Grenzwerte, so wird der entsprechende Bauteil als nicht in Ordnung gekennzeichnet und/oder es wird der Produktionsvorgang unterbrochen.

Ebenso können die Sollwerte für das Schließen der Spannvorrichtung erhöht werden, um die notwendigen Schließkräfte aufzubringen und andererseits die Spannvorrichtung vor zu großen Belastungen zu schützen.

Die Messeinrichtungen werden vorteilhafterweise vor der Messung kalibriert, sodass während der Messungen nur die Abweichungen vom einem Sollwert detektiert werden.

Selbstverständlich ist das erfindungsgemäße Verfahren nicht auf die Anwendung in der Automobilindustrie beschränkt, sondern umfasst beliebige Verfahren, bei denen Fügeteile in einer Befestigung eingespannt werden, z.B. zum Spannen und Schweißen von waagrecht angeordneten Werkstücken.

## Patentansprüche

1. Verfahren zur Bestimmung eines Parameters mindestens eines Fügeteils (2), wie eines Karosserieteils, wobei sich der Fügeteil (2) in einer Befestigung (1), z.B. in einem Spannrahmen, befindet und von der Befestigung (1) auf den Fügeteil (2) eine definierte Kraft ausgeübt wird, **dadurch gekennzeichnet, dass** an zumindest einer Stelle (B) der Befestigung (1) oder des Fügeteils (2) die auf den Fügeteil (2) wirkende Kraft (F) gemessen wird, die Messdaten mit Referenzdaten verglichen werden und aufgrund des Vergleichs die Geometrie und/oder die Lage des Fügeteils (2) und/oder die weitere Verarbeitung des Fügeteils (2) bestimmt wird.

2. Verfahren nach Anspruch 1, **dadurch gekennzeichnet, dass** an zumindest einer weiteren Stelle (A) die Position des Fügeteils (2) zu einem Bezugspunkt außerhalb des Fügeteils (2) gemessen wird und diese Messdaten mit entsprechenden Referenzdaten verglichen und zur Bestimmung der Geometrie und/oder der Lage des Fügeteils (2) und/oder der weiteren Verarbeitung des Fügeteils (2) verwendet werden.

3. Verfahren nach einem der Ansprüche 1 oder 2, **dadurch gekennzeichnet, dass** eine Verformung, wie Dehnung oder Durchbiegung, der Befestigung (1) gemessen wird und diese Messdaten zur Bestimmung der Geometrie der Befestigung (1) und/oder eines an der Befestigung (1) anliegenden Fügeteils (2) und/oder einer weiteren Befestigung verwendet werden.

4. Verfahren nach einem der Ansprüche 1 bis 3, **dadurch gekennzeichnet, dass** der Zusammenhang zwischen Messdaten und Referenzdaten aus Versuchsmessungen bestimmt wird.

5. Verfahren nach einem der Ansprüche 1 bis 3, **dadurch gekennzeichnet, dass** der Zusammenhang zwischen Messdaten und Referenzdaten aus Simulationsrechnungen bestimmt wird.

6. Verfahren nach einem der Ansprüche 1 bis 5, **dadurch gekennzeichnet, dass** die Messdaten dynamisch erfasst werden.

7. Verfahren nach einem der Ansprüche 1 bis 6, **dadurch gekennzeichnet, dass** bei Abweichung der Messdaten von den Referenzdaten eine Ausgleichshandlung erfolgt.

8. Spannrahmen zur Durchführung eines Verfahrens nach Anspruch 1 mit am Spannrahmen (1) angebrachten Spannvorrichtungen (5) zum Halten bzw. Spannen von Fügeteilen (2), **dadurch gekennzeichnet, dass** zumindest eine Spannvorrichtung (5) eine Kraftmesseinrichtung aufweist, die mit einer Auswerteeinheit verbunden ist, mit welcher die Messdaten mit Referenzdaten vergleichbar und aufgrund des Vergleichs die Geometrie und/oder die Lage des Fügeteils (2) und/oder die weitere Verarbeitung des Fügeteils (2) bestimmbar ist.

9. Spannrahmen nach Anspruch 8, **dadurch gekennzeichnet, dass** eine Kraftmesseinrichtung in einer Auflagefläche (4) für den Fügeteil (2) angeordnet ist.

10. Spannrahmen nach Anspruch 8 oder 9, **dadurch gekennzeichnet, dass** eine Kraftmesseinrichtung an einem Spanner (6) der Spannvorrichtung (5) angeordnet ist.

11. Spannrahmen nach einem der Ansprüche 8 bis 10, **dadurch gekennzeichnet, dass** eine Kraftmesseinrichtung zwischen Spannvorrichtung (5) und Spannrahmen (1) angeordnet ist.

12. Spannrahmen nach einem der Ansprüche 8 bis 11, **dadurch gekennzeichnet, dass** am Spannrahmen (1) zumindest eine Wegmesseinrichtung (7, 8, 10) angebracht ist, die geeignet ist, den Abstand zwischen Fügeteil (2) und Spannrahmen (1) zu messen, und die mit der Auswerteeinheit verbunden ist.

13. Spannrahmen nach einem der Ansprüche 8 bis **12, dadurch gekennzeichnet, dass** am Spannrahmen (1) zumindest eine Messeinrichtung, die mit der Auswerteeinheit verbunden ist, zur Messung der Verformung des Spannrahmens (1) angeordnet ist.

14. Bearbeitungsstation zum Positionieren zumindest eines Spannrahmens mit Hilfe von in der Bearbeitungsstation vorgesehenen Befestigungen, insbesondere zur Durchführung des Verfahrens nach Anspruch 1, **dadurch gekennzeichnet, dass** zumindest eine Befestigung und/oder der Spannrahmen eine Kraftmesseinrichtung zur Messung der auf den Spannrahmen wirkenden Kraft aufweist, die mit einer Auswerteeinheit verbunden ist, mit welcher die Messdaten mit Referenzdaten vergleichbar und aufgrund des Vergleichs die Geometrie und/oder die Lage des Spannrahmens bestimmbar ist.

15. Bearbeitungsstation nach Anspruch 14, **dadurch gekennzeichnet, dass** der Spannrahmen nach einem der Ansprüche 8 bis 13 ausgeführt ist.

16. Bearbeitungsstation nach Anspruch 15, **dadurch gekennzeichnet, dass** die Kraft- und gegebenenfalls die Wegmesseinrichtungen (7, 8, 10) des Spannrahmens (1) und der Befestigung und mit einer gemeinsamen Auswerteeinheit verbunden sind.
